# EUROPEAN PATENT APPLICATION

(11) **EP 4 737 317 A1**
(43) Date of publication of application: **06.05.2026**
(21) Application number: 25208536.0
(22) Date of filing: 14.10.2025
(51) Int. Cl.: B64D 13/04, B64D 41/00

(54) **AIR SYSTEM WITH GENERATOR FOR CABIN PRESSURIZATION**

(30) Priority: 05.11.2024 IN 202411084619; 02.01.2025 US 202519008490
(71) Applicant: Honeywell International Inc., Charlotte, NC 28202 (US)
(72) Inventor: NYAMAGOUDAR, Vinayak M., Charlotte, 28202 (US); DESHPANDE, Prashant, Charlotte, 28202 (US)
(74) Representative: Haseltine Lake Kempner LLP

(57) **Abstract**

In some examples, a system includes a compressor configured to provide a compressed air flow to pressurize a compartment of a vehicle, such as an aircraft. The compressor is configured to provide the compressed air flow using a primary mechanical power provided by a motor assembly or a secondary mechanical power provided by a turbine assembly. The system is configured to cause the compressor to transition from using the primary mechanical power to using the secondary mechanical power when an input electrical power to the motor assembly is below a threshold. The system includes a generator assembly configured to provide an output electrical power using the secondary mechanical power.

## Description

This application claims the benefit of Indian Provisional Patent Application No. 202411084619, filed November 5, 2024, and entitled "AIR SYSTEM WITH GENERATOR FOR CABIN PRESSURIZATION," the entire contents of which is incorporated herein by reference.

### TECHNICAL FIELD

The present disclosure relates to air supply systems, such as pressurized air supply systems on-board an aircraft.

### BACKGROUND

Vehicles, such as aircraft, may include a pressurized air supply system to supply a vehicle with air and provide climate control (e.g., temperature and pressure) within one or more compartments of the vehicle. In the case of an aircraft, the pressurized air supply system may receive an air flow and condition the air flow prior to providing the air flow to the compartment. In examples, the pressurized air system cools the air flow and provides for recirculation among the compartments of the vehicle. In some examples, the pressurized air system may provide pressurization to the aircraft interior for the comfort and/or safety of passengers and crew.

### SUMMARY

In examples, a system comprises a motor assembly configured to produce a primary mechanical power when the motor assembly receives an input electrical power from an electrical distribution system of a vehicle, a turbine assembly configured to couple to a vehicle body of the vehicle, wherein the turbine assembly includes a turbine configured to produce a secondary mechanical power when the turbine receives a ram air flow; a compressing element configured to compress an inlet air flow using at least one of the primary mechanical power or a first portion of the secondary mechanical power; a generator assembly configured to provide an output electrical power to the electrical distribution system when the generator assembly receives a second portion of the secondary mechanical power; and a clutching mechanism having a disengaged configuration and an engaged configuration, wherein the clutching mechanism is configured to limit a delivery of at least one of the first portion to the compressing element or the second portion to the generator assembly in the disengaged configuration and increase the delivery of the at least one of the first portion to the compressing element or the second portion to the generator assembly in the engaged configuration, and wherein the clutching mechanism is configured to transition from the disengaged configuration to the engaged configuration when the input electrical power decreases below a threshold.

In examples, a system comprises a motor-generator comprising: a motor assembly configured to produce a primary mechanical power when the motor assembly receives an input electrical power from an electrical distribution system of a vehicle, and a generator assembly configured to provide an output electrical power to the electrical distribution system; a turbine assembly including a turbine, the turbine assembly configured to establish a deployed configuration relative to an aircraft body of an aircraft and establish a stowed configuration relative to the aircraft body, wherein the turbine is configured to receive a ram air flow and produce a secondary mechanical power using the ram air flow when the turbine assembly is in the deployed configuration, and wherein the turbine assembly is configured to limit a receipt of the ram air flow by the turbine when the turbine assembly is in the stowed configuration; a compressing element configured to compress an inlet air flow to provide a compressed air flow to a compartment of the vehicle, wherein the compressing element is configured to compress the inlet air flow using at least one of the primary mechanical power or a first portion of the secondary mechanical power, and wherein the generator assembly is configured to receive a second portion of the secondary mechanical power to provide the output electrical power; and a clutching mechanism having an engaged configuration and a disengaged configuration, wherein the clutching mechanism is configured to limit a delivery of the mechanical power from the turbine to the compressing element in the disengaged configuration and increase the delivery of the mechanical power from the turbine to the compressing element in the engaged configuration, wherein the clutching mechanism is configured to transition from the disengaged configuration to the engaged configuration when the input electrical power decreases below a threshold, and wherein the turbine assembly is configured to transition from the stowed configuration to the deployed configuration when the input electrical power decreases below the threshold.

In examples, a method comprises producing, using a motor assembly receiving an input electrical power from an electrical distribution system of a vehicle, a primary mechanical power; compressing, using a compressing element receiving the primary mechanical power, an inlet air flow, wherein the compressing element is configured to compress the inlet air flow using at least one of the primary mechanical power or a secondary mechanical power; producing, when the input electrical power decreases below a threshold, and by transitioning a clutching mechanism from a disengaged configuration to an engaged configuration, the secondary mechanical power using a turbine assembly; and causing the compressing element to compress the inlet air flow using a first portion of the secondary mechanical power and causing a generator assembly to provide an output electrical power to the electrical distribution system using a second portion of the secondary mechanical power, wherein the clutching mechanism is configured to limit a delivery of the secondary mechanical power from the turbine assembly to the compressing element and the generator assembly in the disengaged configuration and increase the delivery of the secondary mechanical power from the turbine assembly to the compressing element and the generator assembly in the engaged configuration

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a schematic illustration of a portion of a vehicle including an air system configured to deliver an air flow to one or more compartments of the vehicle.
FIG. 2 is a schematic illustration of a portion of the air system including a motor-generator.
FIG. 3 is a schematic illustration of an air system including a compressor configured to receive compressor power from an electrical distribution system of an aircraft or a ram air turbine.
FIG. 4 is a flow diagram illustrating an example method of providing pressurized air to a compartment of a vehicle.

### DETAILED DESCRIPTION

The present disclosure describes a system configured to provide pressurized air to a compartment of a vehicle, such as an aircraft. For example, the system may be configured to provide the pressurized air to one or more of a passenger cabin of an aircraft, a flight deck of the aircraft, a cargo hold of the aircraft, and/or other compartments of the aircraft. In examples, the system is configured to receive an inlet air flow from an environment external to the aircraft and pressurize (e.g., compress) the inlet air flow prior to providing the compressed air to the compartment, in order to provide pressurization to the aircraft interior for the comfort and/or safety of passengers and crew.

The system includes a compressor configured to receive the inlet air flow from an environment external to the aircraft and pressurize the inlet air flow. In examples, the compressor is configured to receive the inlet air flow via an air intake, such as a scoop or cowl. In examples, the air intake projects from an outer surface of the aircraft. The air intake is configured to receive the inlet air flow during a flight phase of the aircraft, hence the air stream received may be at a relatively low pressure (e.g., less than about 5 psi (0.34 Bar)). The compressor is configured to receive the inlet air flow (e.g., at the relatively low pressure) and compress the inlet air flow, such that the system may maintain a pressurized air environment in the one or more compartments of the aircraft. Hence, during typical flight operation, the system is configured to receive a flow of the relatively low pressure air surrounding the aircraft and increase the pressure of the air before providing the compressed air to the compartment, in order to substantially maintain pressurization of the compartment.

The compressor is configured to compress the inlet air flow to produce a compressed air flow using a compressor power provided to a compressing element of the compressor (e.g., provided to an impellor, a piston, one or more vanes, or another element). For example, the compressor power may be a primary mechanical power provided to the compressing element by a motor assembly of the system (e.g., a compressor motor) or at least a portion of a secondary mechanical power provided to the compressing element by a turbine assembly of the vehicle. The system is configured such that the compressing element may transition at least from utilizing the primary mechanical power to utilizing the secondary mechanical power should the primary mechanical power be insufficient (e.g., degraded and/or lost to the system), such that the compressor continues to compress the inlet air flow and provide pressurization to the compartment. The system further includes a generator assembly configured to provide electrical power to the vehicle using another portion of the secondary mechanical power to, for example, at least partially compensate for a degradation (e.g., a loss) of primary vehicle electric power which may have caused the loss of the primary mechanical power.

For example, in a typical operation, the system might be operating such that the motor assembly of the system provides the primary mechanical power to the compressing element using input electrical power from an electrical distribution system of an aircraft. The compressing element may be compressing the inlet air flow using the primary mechanical power to provide pressurization to a compartment of the aircraft. The system is configured to sense a degradation (e.g., a loss) of the primary mechanical power and commence providing at least a portion of the secondary mechanical power (e.g., from a turbine of the aircraft) to the compressing element, such that compressor continues to provide pressurization to the compartment. Further, the generator assembly of the system uses another portion of the secondary mechanical power to provide an output electrical power to the electrical distribution system of the aircraft to, for example, at least partially compensate for a degradation of the electrical distribution system (e.g., a loss of a power source). For example, the generator assembly may provide the output electrical power to partially compensate for a degradation of the electrical distribution system which might have caused the motor assembly to cease receiving the input electrical power and consequently ceasing to provide the primary mechanical power. Hence, the system is configured to safeguard against a loss of compartment pressure (e.g., cabin or flight deck pressure) if a power source providing the input electrical power to the motor assembly suffers a casualty, as well as provide an output electrical power to at least partially compensate for the loss of the power source.

In some examples, the motor assembly of the system and the generator assembly of the system comprise a motor-generator ("M-G set"). The M-G set may include a stator and a rotor configured to rotate relative to the stator. The stator and the rotor may comprise the motor assembly of the system and the generator assembly of the system. For example, the M-G set may be configured such that, when the stator receives the input electrical power from the electrical distribution system of the vehicle, the M-G set causes rotation of the rotor to provide the primary mechanical power to the compressing element (e.g., the input electrical power causes the M-G set to act as a motor). The M-G set may be configured such that, when the rotor receives a portion of the secondary mechanical power from the turbine assembly, the M-G set causes the stator to provide the output electrical power to the electrical distribution system (e.g., the portion of the secondary mechanical power causes the M-G set to act as a generator).

Hence, the system is configured such that the compressing element of the compressor may compress the inlet air flow to pressurize a cabin of a vehicle using a primary mechanical power provided by the motor assembly (e.g., the M-G set) or a secondary mechanical power provided by the turbine assembly. The motor assembly may provide the primary mechanical power to the compressing element when the motor assembly receives an input electrical power from the electrical distribution system of the vehicle. The turbine assembly may provide the secondary mechanical power to the compressing element when the primary mechanical power is insufficient (e.g., when the input electrical power from the electrical distribution system to the motor assembly is degraded and/or lost). The turbine assembly may further provide the secondary mechanical power to the generator assembly of the system (e.g., the M-G set) such that the generator assembly provides an output electrical power to the electrical distribution system of the vehicle to, for example, at least partially compensate for a degradation of the electrical distribution system (e.g., a loss of a power supply and/or another portion of the electrical distribution system).

The system includes a turbine assembly including a turbine configured to produce the secondary mechanical power. The turbine assembly may be coupled to (e.g., supported by) a body of the aircraft ("aircraft body"). In examples, the turbine is configured to receive a ram air flow to generate the secondary mechanical power. For example, the turbine may include a plurality of turbine blades ("turbine blades") coupled to a shaft ("turbine shaft"). The turbine blades may be configured to cause rotation of the turbine shaft when the ram air flow impacts the turbine blades, such that the turbine blades generate the secondary mechanical power and transfer the secondary mechanical power to the turbine shaft. The system (e.g., when electrical power to the motor assembly of the system is lost or insufficient) may be configured to transfer the secondary mechanical power generated by the turbine to the compressing element and/or the generator assembly, such that compressing element may provide the compressed air flow and/or the generator assembly may provide the output electrical power using the secondary mechanical power.

As used herein, a ram air flow may mean a volume of air which has a velocity relative to the turbine assembly (e.g., a turbine blade) and/or the aircraft body. For example, when the aircraft travels in a first direction at a first speed (e.g., a speed-over-ground), the travel of the aircraft may cause a volume of air external to the aircraft to have a velocity relative to the turbine assembly and/or the aircraft body in a second direction substantially opposite the first direction. In examples, when the aircraft travels in a forward direction (e.g., a direction from an aft portion of the aircraft toward a forward portion of the aircraft), the ram air has a relative velocity substantially in an aft direction (e.g., a direction from the forward portion toward the aft portion).

The system includes a clutching mechanism having an disengaged configuration and a engaged configuration. In the disengaged configuration, the clutching mechanism is configured to limit (e.g., to prevent) the delivery of the secondary mechanical power from the turbine assembly to the compressing element of the compressor and/or the generator assembly. In the engaged configuration, the clutching mechanism is configured to increase (e.g., to allow) the delivery of the secondary mechanical power from the turbine assembly to the compressing element (e.g., via an input shaft) and/or the generator assembly. The clutching mechanism may be configured to transition from the disengaged configuration to the engaged configuration when the input electrical power provided to the motor assembly fails below a threshold. The threshold may be, for example, a level of electrical power (e.g., as indicated by a voltage) too low for operation of the motor assembly, a complete loss of electrical power provided by the electrical distribution system, or some other threshold.

Hence, the system includes a compressor having a compressing element configured to produce a compressed air flow for a compartment using either a primary mechanical power from a motor assembly (e.g., generated using input electrical power from an electrical distribution system of an aircraft) or a secondary mechanical power from an turbine assembly of the aircraft. The system is configured to transition (e.g., using the clutching mechanism) the compressing element from using the primary mechanical power to compress the inlet air flow to using the secondary mechanical power to compress the inlet air flow. For example, the clutching mechanism may be configured to substantially shift the compressing element from using the primary mechanical power to using at least a portion of the secondary mechanical power when the input electrical power provided to the motor assembly fails below a threshold. The system is further configured to provide another portion of the secondary mechanical power to a generator assembly to provide output mechanical power to the electrical distribution system of the vehicle. Thus, the system may be configured to safeguard against a loss of compartment pressure (e.g., cabin or flight deck pressure) and/or a complete loss of electrical power if a portion of the electrical distribution system of the vehicle (e.g., a power source) becomes unable to provide the electrical power.

While an aircraft is primarily referred to herein, the cooling devices, systems, and methods described herein can be used with other vehicles, including marine vehicles and/or land vehicles.

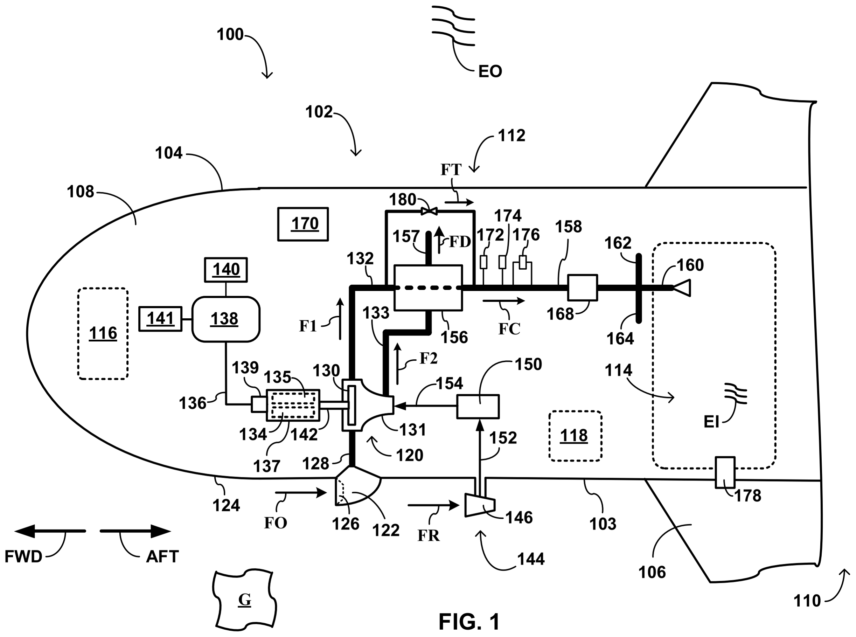

FIG. 1 schematically illustrates an example system 100 configured to provide a compressed air flow FC to one or more compartments of a vehicle 102. In examples, vehicle 102 (e.g., an aircraft) includes a fuselage 104 and wing 106 coupled (e.g., affixed) to fuselage 104. In examples, vehicle 102 includes a body 103 ("vehicle body 103") defining a forward portion 108 and an aft portion 110. In examples, vehicle 102 is configured to travel (e.g., during flight operations) in at least a forward direction FWD (e.g., a direction from aft portion 110 towards forward portion 108) relative to ground G (e.g., earth's surface). In examples, vehicle 102 is configured to travel (e.g., during flight operations) through an external atmosphere EO substantially external to and/or surrounding vehicle 102. Vehicle 102 includes one or more compartments 112 ("compartments 112"), such as cabin 114, flight deck 116, cargo hold 118, and/or other compartments of vehicle 102 (e.g., one or more galleys, lavatories, and/or other compartments). In examples, compartments 112 are supported by and/or housed within fuselage 104.

System 100 is configured to provide compressed air flow FC to one or more of compartments 112. For example, when vehicle 102 is an aircraft, system 100 may be configured to provide at least some portion of compressed air flow FC to cabin 114. System 100 may provide compressed air flow FC to cabin 114 to substantially maintain an internal atmosphere EI of cabin 114 at a pressure greater than or equal to external atmosphere EO. Although discussed largely with reference to cabin 114 in the examples below, system 100 may be configured to provide at least portions of compressed air flow FC to other of compartments 112 in substantially the same manner as system 100 provides the portion of compressed air flow FC to cabin 114.

System 100 is configured to receive an inlet air flow FO from external environment EO and pressurize (e.g., compress) inlet air flow FO to provide compressed air flow FC to cabin 114 (and/or other compartments of vehicle 102). System 100 includes a compressor 120 configured to receive inlet air flow FO from external environment EO and pressurize inlet air flow FO using a compressing element 130. In examples, compressor 120 is configured to receive inlet air flow FO via an air intake 122, such as a scoop or cowl. In some examples, air intake 122 substantially projects from an outer surface 124 (e.g., an aircraft skin) of vehicle 102, although this is not required. Outer surface 124 may be a portion of vehicle body 103.

Air intake 122 may be configured to receive intake air flow FO at least as vehicle 102 travels in forward direction FWD. In examples, air intake 122 defines an opening 126 ("intake opening 126") configured to receive intake air flow FI. In some examples, air intake 122 is configured such that intake opening 126 substantially faces toward forward direction FWD. Air intake 122 may be configured in any manner sufficient to receive inlet air flow FO (e.g., via intake opening 126). Further, although represented in FIG. 1 as projecting substantially from a side of vehicle 102, air intake 122 may be supported by and/or project from any portion of vehicle 102, and/or may be an opening defined by outer surface 124 which is substantially flush with outer surface 124.

Compressor 120 may be configured to receive inlet air flow FO from air intake 122 (e.g., via a conduit 128). Compressor 120 may be configured to compress at least some portion of inlet air flow FO using compressing element 130 (e.g., an impellor, a plurality of compressor blades, and/or another compressing element) to increase a pressure of inlet air flow FO (e.g., to increase the pressure above a pressure of external environment EO). In examples, compressor 120 is configured to compress at least some portion of inlet air flow FO and issue a first flow F1 having a pressure greater than inlet air flow FO (e.g., greater than a pressure of external environment EO). In some examples, compressor 120 is configured to discharge first flow F1 to a conduit 132. Compressor 120 may be any type of compressor configured to receive inlet air flow FO and issue first flow F1 at a higher pressure than inlet air flow FO. In examples, compressing element 130 is configured to move relative to a compressor housing 131 to cause compressor 120 to compress inlet air flow FO and provide first flow F1.

Compressor 120 may be any type of compressor including any type of compressing element 130 configured to receive at least some portion of inlet air flow FO and compress the portion to discharge first flow F1. For example, compressing element 130 may include one or more airfoils configured to move relative to compressor housing 131 (e.g., compressor 120 may be an axial compressor). In examples, compressing element 130 includes an impellor configured to move relative to compressor housing 131 (e.g., compressor 120 may be a centrifugal compressor). Compressing element 130 may include one or more pistons configured to move relative to compressor housing 131 (e.g., compressor 120 may be a reciprocating and/or positive displacement compressor). Compressing element 130 may include one or more spiral rotors configured to move relative to compressor housing 131 (e.g., compressor 120 may be a rotary screw compressor). Compressing element 130 may include one or more vanes configured to move relative to compressor housing 131 (e.g., compressor 120 may be a rotary vane compressor). Compressor 120 may be another type of compressor including another type of compressing element 130 in other examples.

Compressor 120 is configured to compress at least a portion of inlet air flow FO and provide first flow F1 using a primary mechanical power provided to compressing element 130 or a secondary mechanical power provided to compressing element 130. For example, compressor 120 may be configured to receive the primary mechanical power via a shaft 142 ("compressor shaft 142). Compressor 120 may be configured to receive the secondary mechanical power via an output pathway 154. System 100 is configured to cause compressor 120 to transition from using a primary mechanical power to using the secondary mechanical power when, for example, the primary mechanical power is insufficient to adequately compress inlet air flow FO. Hence, system 100 is configured such that compressor 120 may substantially maintain a pressure within compartments 112 using either of primary mechanical power (e.g., received via compressor shaft 142) or secondary mechanical power (e.g., received via output pathway 154).

System 100 includes a motor assembly 134 configured to provide the primary mechanical power to compressing element 130 (e.g., via compressor shaft 142). Motor assembly 134 is configured to receive an input electrical power and provide the primary mechanical power using the input electrical power. For example, motor assembly 134 may be configured to receive an input electrical power from an electrical distribution system 138 of vehicle 102. In examples, motor assembly 134 is configured to receive the input electrical power via one or more electrical cables 136 ("electrical cables 136"). Motor assembly 134 may be configured to cause compressor 120 (e.g., compressing element 130) to compress inlet air flow FO and provide first flow F1 when motor assembly 134 receives the input electrical power. For example, motor assembly 134 may be configured to cause compressing element 130 to move relative to compressor housing 131 using compressor shaft 142 when motor assembly 134 receives the input electrical power. Hence, compressor 120 is configured to compress inlet air flow FO to provide first flow F1 when compressor 120 receives primary mechanical power from motor assembly 134.

In examples, electrical distribution system 138 is configured to receive the electrical power from a power source 140 supported by vehicle 102. Power source 140 may be a turbine generator, a fuel cell, a battery, or some other power source configured to supply electrical power to electrical distribution system 138. Instead of or in addition to power source 140, in some examples, electrical distribution system 138 and/or motor assembly 134 may be configured to receive electrical power provided by a ground based power source and provided to vehicle 102. Electrical distribution system 138 may be further configured to provide electrical power to other electrical loads of vehicle 102, such as to one or more avionics systems 141 ("avionics 141").

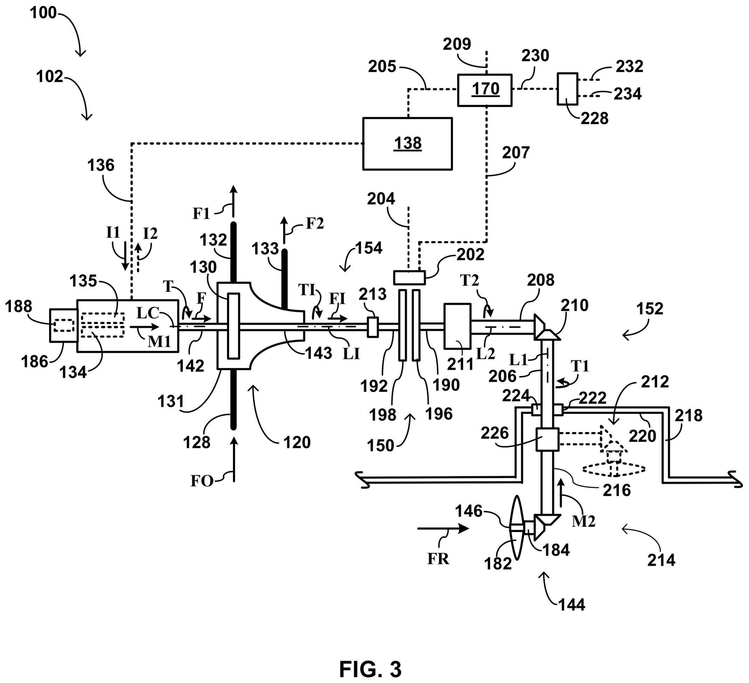

Compressor 120 (e.g., compressing element 130) is further configured to compress inlet air flow FO and provide first flow F1 using secondary mechanical power (e.g., received via output pathway 154). For example, compressor 120 may be configured to compress inlet air flow FO using secondary mechanical power when the primary mechanical power provided by motor assembly 134 falls below a threshold (e.g., as indicated by the input electrical power from electrical distribution system 138 falling below a threshold). In examples, system 100 includes a turbine assembly 144 including a turbine 146 configured to produce the secondary mechanical power. Turbine assembly 144 may be coupled to (e.g., supported by) vehicle body 103. In examples, turbine 146 is configured to receive a ram air flow FR to generate the secondary mechanical power. For example, turbine 146 may include a plurality of blades (e.g., turbine blades 182 (FIG.3)) coupled to a turbine shaft (e.g., turbine shaft 184 (FIG. 3)). The turbine blades may be configured to cause rotation of the turbine shaft when ram air flow FR impacts the turbine blades, such that the turbine blades generate mechanical energy and transfer the mechanical energy to the turbine shaft.

System 100 (e.g., when electrical power to motor assembly 134 is lost or insufficient) is configured to transfer the secondary mechanical power generated by turbine 146 to compressor 120, such that compressor 120 may provide compressed flow FC (e.g., to cabin 114 ) using the secondary mechanical power. Hence, in a typical operation, system 100 may provide compressed flow FC to cabin 114 using primary mechanical power produced by motor assembly 134 as motor assembly 134 receives input electrical power from electrical distribution system 138. If the input electrical power to motor assembly 134 is lost or insufficient, system 100 may transition compressor 120 to receiving at least a portion of the secondary mechanical power from turbine assembly 144, such that compressor 120 continues to provide compressed air flow FC to cabin 114 (and/or other of compartments 112).

System 100 further includes a generator assembly 135 configured to produce an output electrical power using another portion of the secondary mechanical power generated by turbine assembly 144. For example, system 100 may be configured to provide a first portion of the secondary mechanical power to compressing element 130 and a second portion of the secondary mechanical power to generator assembly 135. Generator assembly 135 is configured to provide the output electrical power to electrical distribution system 138 (e.g., via electrical cables 136 or another portion of electrical distribution system 138). Hence, system 100 may be configured to use at least a portion of the secondary mechanical power to substantially compensate for a decrease (e.g., a loss) in the input electrical power that might typically be provided to motor assembly 134 and/or avionics 141.

For example, if power source 140 were to suffer a casualty such that electrical distribution system 138 ceases to provide an adequate input electrical power to motor assembly 134, system 100 may provide the second portion of the secondary mechanical power to generator assembly 135 (e.g., while providing the first portion to compressor 120) such that generator assembly 135 produces the output electrical power to at least partially compensate for the casualty experienced by power source 140. In examples, system 100 (e.g., generator assembly 135 and/or electrical distribution system 138) includes a generator controller 139 (e.g., a converter and/or a regulator) configured to condition and/or limit a voltage, a current, and/or a frequency of the output electrical power provided to electrical distribution system 138 by generator assembly 135.

In some examples, generator assembly 135 is configured to receive the second portion of the secondary mechanical power via compressor shaft 142. For example, system 100 may include a motor-generator set 137 ("M-G set 137") which includes motor assembly 134 and generator assembly 135. M-G set 137 may include a stator configured to be substantially stationary (e.g., with respect to some portion of vehicle body 103) and a rotor configured to rotate relative to the stator. The stator and the rotor may comprise motor assembly 134 and generator assembly 135. For example, M-G set 137 may be configured such that, when the stator receives input electrical power from electrical distribution system 138, M-G set 137 causes rotation of the rotor to provide the primary mechanical power to compressing element 130. In examples, system 100 is configure such that rotation of the rotor causes rotation of compressor shaft 142. M-G set 137 may be configured such that, when the rotor receives the second portion of the secondary mechanical power from turbine assembly 144, M-G set 137 causes the stator to provide the output electrical power to electrical distribution system 138. In examples, system 100 is configure such that rotation of compressing element 130 (e.g., by a first portion of the secondary mechanical power) causes the rotation of the stator (e.g., by causing rotation of compressor shaft 142).

Hence, M-G set 137 may be configured to transition between a motoring mode and a generating mode. In the motoring mode, M-G set 137 may receive input electrical power from electrical distribution system 138 and provide the primary mechanical power to compressor 120 (e.g., compressing element 130). In the generating mode, M-G set 137 may receive the second portion of the secondary mechanical power from turbine assembly 144 (e.g., via compressor shaft 142) and provide the output electrical power to electrical distribution system 138.

Although FIG. 1 depicts generator assembly 135 as proximate motor assembly 134 and/or configured to receive the second portion of the secondary mechanical power via compressor shaft 142, this is not required. Generator assembly 135 may be located anywhere within system 100 and/or configured to receive the second portion via any portion of system 100. For example, in some examples, generator assembly 135 may be configured to receive the second portion via some portion of output pathway 154, a clutching mechanism 150 of system 100, and/or an input pathway 152 of system 100.

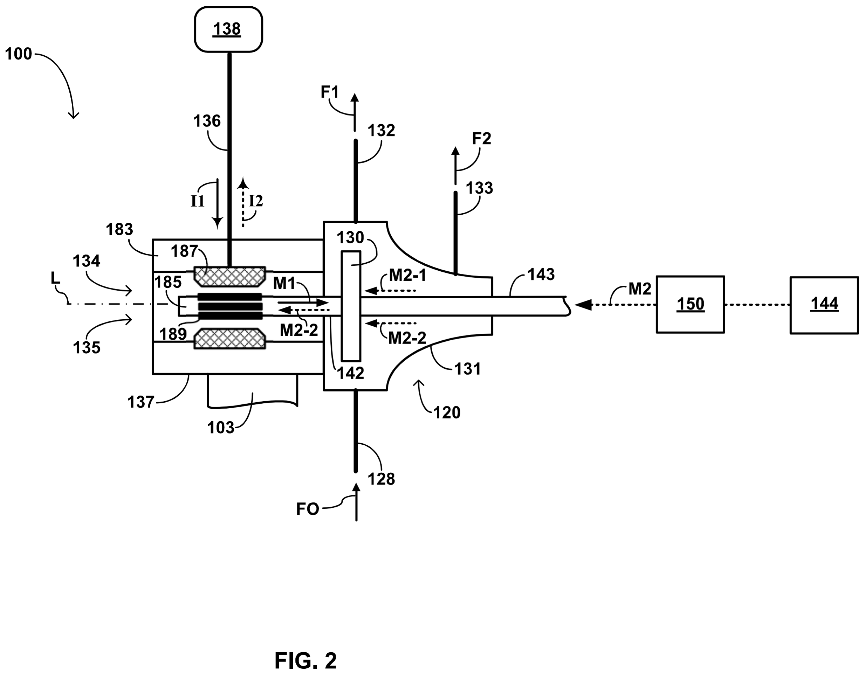

FIG. 2 schematically illustrates a portion of system 100 including compressor 120 configured to compress inlet flow FO using a primary mechanical power M1 provided by M-G set 137 or a secondary mechanical power M2 provided by turbine assembly 144. In the example of FIG. 2, M-G set 137 includes motor assembly 134 and generator assembly 135. M-G set 137 may include a stator 183 configured to remain substantially stationary relative to a portion of vehicle body 103 and a rotor 185 configured to move (e.g., rotate) relative to stator 183. In examples, rotor 185 is configured to rotate about a longitudinal axis L substantially surrounded by stator 183 and extending through rotor 185.

In examples, stator 183 supports windings 187 configured to at least partially surround rotor 185 and/or longitudinal axis L. Rotor 185 may support a rotor element 189. Rotor element 189 may be configured to emit a rotor field, some portion of which passes through windings 187. Windings 187 may be configured to emit a winding field (e.g., at least when an electric current passes through windings 187). M-G set 137 may be configured such that rotor element 189 and the rotor field move (e.g., rotate) relative to windings 187 when rotor 185 moves (e.g., rotates) relative to stator 183. Windings 187 may be configured such that a current provided to windings 187 causes the winding field to rotate about longitudinal axis L (e.g., in either a substantially continuous or step rotation). Stator 183, rotor 185, windings 187, and/or rotor element 189 either alone or in any combination may comprise at least some portion of motor assembly 134 and/or generator assembly 135. In examples, rotor element 189 includes one or more permanent magnets configured to produce at least some portion of the rotor field.

System 100 may be configured to operate in a primary mode whereby motor assembly 134 (e.g., windings 187) receives an input electrical power I1 from electrical distribution system 138 and causes rotor 185 to produce primary mechanical power M1. Rotor 185 may be configured to transfer primary mechanical power M1 to compressing element 130 via compressor shaft 142. In examples, input electrical power I1 causes an alternating current (AC) within windings 187. The alternating current may cause the winding field to be generated by windings 187 to rotate about longitudinal axis L. In some examples, input electrical power I1 may cause an direct current (DC) within windings 187 (e.g., M-G set 137 may include a commutator or other apparatus to cause a step rotation of the winding field). The rotation of the winding field about longitudinal axis L may cause rotor element 189 to rotate about longitudinal axis L, generating primary mechanical power M1. Compressor 120 (e.g., compressor shaft 142) may be configured to receive and/or transfer first mechanical power M1 to compressing element 130. Compressing element 130 may produce first flow F1 using first mechanical power M1.

System 100 may be configured to operate in the primary mode when (e.g., as long as) input electrical power I1 is equal to or greater than a threshold. Clutching mechanism 150 may be configured to remain in the disengagement configuration (and/or turbine assembly 144 may be configured to remain in a stowed configuration (FIG. 3)) when input electrical power I1 is equal to or greater than the threshold, such that a receipt of secondary mechanical power M2 by compressor 120 is limited (e.g., substantially absent).

System 100 is configured to transition from the primary mode to a secondary mode when input electrical power I1 is below the threshold (e.g., when input electrical power I1 falls below the threshold). In the secondary mode, system 100 may be configured to cause clutching mechanism 150 to transition from the disengagement configuration to the engagement configuration, such that clutching mechanism 150 may transfer secondary mechanical power M2 produced by turbine assembly 144 to compressor 120. In examples, system 100 is configured to cause turbine assembly 144 to commence producing second mechanical power M2 when input electrical power I1 is below the threshold (e.g., system 100 may cause turbine assembly 144 to transfer from a stowed configuration (FIG. 3) to a deployed configuration). In examples, compressor 120 is configured to receive secondary mechanical power M2 via an input shaft 143 of compressor 120 ("compressor input shaft 143").

System 100 may be configured to use a first portion M2-1 of secondary mechanical power M2 to produce at least first flow F1. Compressor 120 may be configured to transfer first portion M2-1 to compressing element 130 (e.g., via compressor input shaft 143) to cause compressing element 130 to produce at least first flow F1 using first portion M2-1. System 100 may be configured to use a second portion M2-2 of secondary mechanical power M2 to cause generator assembly 135 (e.g., M-G set 137) to provide an output electrical power I2 to electrical distribution system 138. System 100 may be configured to transfer second portion M2-2 to a rotor of generator assembly 135 (e.g., rotor 185 of M-G set 137) to cause generator assembly 135 to provide output electrical power 12. Hence, system 100 may be configured such the compressing element 130 provides first flow F1 using first portion M2-1 and generator assembly 135 provides output electrical power I2 when turbine assembly 144 provides secondary mechanical power M2.

In some examples, compressor shaft 142 and compressor input shaft 143 define a common (e.g., a contiguous) shaft. In examples, longitudinal axis L extends through the common shaft. Compressing element 130 may be configured to rotate about longitudinal axis L when the common shaft rotates about longitudinal axis L. In some examples, compressor 120 and M-G set 137 form a substantially integrated device. For example, compressor housing 131 may support M-G set 137.

Further, as is understood, second portion M2-2 may be dependent on an amount of electrical loading (e.g., output electrical power I2) experienced by generator assembly 135. For example, an increase in the electrical loading on generator assembly 135 (e.g., increasing output electrical power I2) might be expected to increase the magnitude of second portion M2-2 transferred to generator assembly 135. A decrease in the electrical loading on generator assembly 135 (e.g., decreasing output electrical power I2) might be expected to decrease the magnitude of second portion M2-2 transferred to generator assembly 135. In some examples, system 100 is configured to control the magnitude of second portion M2-2 by controlling the loading on generator assembly 135 (e.g., by controlling a magnitude of output electrical power I2 provided by generator assembly 135). In some examples, generator controller 139 is configured to control the loading on generator assembly 135 (e.g., control output electrical power I2) by, for example, controlling a voltage and/or current of output electrical power I2. In other examples, electrical distribution system 138 may be configured to control (e.g., to limit) the loading on generator assembly 135 (e.g., through the use of breakers, fuses, and/or other limiting devices).

Returning primarily to FIG. 1, system 100 includes clutching mechanism 150 configured to transfer at least some portion of secondary mechanical power M2 (e.g., at least first portion M2-1) generated by turbine assembly 144 (e.g., turbine 146) to compressor 120. In some examples, clutching mechanism 150 is configured to transfer first portion M2-1 to compressor 120 and transfer second portion M2-2 to generator assembly 135. Clutching mechanism 150 may be configured to receive first portion M2-1 and/or second portion M2-2 from turbine 146 via input pathway 152 and provide first portion M2-1 to compressor 120 and/or second portion M2-2 to generator assembly 135 via an output pathway 154. In examples, input pathway 152 includes one or more components such as shafts, linkages, gears, and/or other components configured to transfer mechanical power (e.g., a torque energy) from turbine 146 to clutching mechanism 150. Output pathway 154 may include one or more components such as shafts, linkages, gears, and/or other components configured to transfer mechanical power (e.g., a torque energy) from clutching mechanism 150 to compressor 120 and/or generator assembly 135. Input pathway 152 and/or output pathway 154 may be configured to transfer mechanical power in any manner. In some examples, input pathway 152 and/or output pathway 154 may include one or more components configured to transfer mechanical energy between a first component and a second component using an electromagnetic or magnetic field extending between the first component and the second component.

Clutching mechanism 150 may be configured to transition between a disengaged configuration and an engaged configuration to control the provision of secondary mechanical power M2 to compressor 120 and/or generator assembly 135. For example, in the disengaged configuration, clutching mechanism 150 may be configured to limit (e.g., to prevent) the delivery of secondary mechanical power M2 from input pathway 152 to output pathway 154, such that the delivery of secondary mechanical power M2 to compressor 120 and/or generator 135 is limited. In the engaged configuration, clutching mechanism 150 may be configured to increase (e.g., to allow) the delivery of secondary mechanical power from input pathway 152 to output pathway 154, such that the secondary mechanical power delivered to compressor 120 and/or generator assembly 135 is increased.

Note that in some examples, for example when generator assembly 135 receives second portion M2-2 from input pathway 152 prior to a transfer of first portion M2-1 through clutching mechanism 150, clutching mechanism 150 may be configured to limit (e.g., to prevent) the delivery of first portion M2-1 from input pathway 152 to output pathway 154 in the disengaged configuration and increase (e.g., allow) the delivery of first portion M2-1 from input pathway 152 to output pathway 154 in the engaged configuration. As stated, generator assembly 135 may be configured to receive second portion M2-2 from any portion of system 100.

In examples, system 100 (e.g., clutching mechanism 150) is configured to cause clutching mechanism 150 to transition from the disengaged configuration (limiting the transfer of secondary mechanical power) to the engaged configuration (increasing the transfer of secondary mechanical power) when input electrical power I1 provided to motor assembly 134 and/or by electrical distribution system 138 falls below a threshold. For example, clutching mechanism 150 may have one or more components (e.g., transfer system 202 (FIG. 3)) configured to substantially maintain clutching mechanism 150 in the disengaged configuration when clutching mechanism 150 receives electrical power from electrical distribution system 138 (e.g., when the one or more components receive a voltage and/or current). The one or more components may be configured to cause clutching mechanism 150 to transition to the engaged configuration when input electrical power I1 (FIG. 2) falls below the threshold. Hence, system 100 may be configured to transition clutching mechanism 150 from the disengaged configuration to the engaged configuration when input electrical power I1 from electrical distribution system 138 falls below the threshold, such that compressor 120 transitions from compressing inlet air flow FO using primary mechanical power M1 (e.g., provided by motor assembly 134) to compressing inlet air flow FO using secondary mechanical power M2 (e.g., provided via clutching mechanism 150), and/or such that generator assembly 135 provides output electrical power I2 to electrical distribution system 138 using secondary mechanical power M2.

In examples, system 100 includes a heat exchanger 156 configured to exchange heat with first flow F1 to, for example, reduce a temperature of flow F1. Heat exchanger 156 may be configured to receive flow F1 (e.g., from conduit 132) and receive a cooling flow F2 (e.g., from a conduit 133) . Heat exchanger 156 may be configured to cause a heat exchange from flow F1 to cooling flow F2. In examples, heat exchanger 156 is configured to issue compressed flow FC, where compressed flow FC comprises first flow F1 less the heat transferred to cooling flow F2. Heat exchanger 156 may be configured to issue a flow FD (e.g., via a conduit 157), where flow FD comprises cooling flow F2 plus the heat transferred from first flow F1. Conduit 157 may be configured to discharge flow FD into external environment EO (e.g., configured to discharge flow FD overboard) or configured to discharge flow FD to another system of vehicle 102.

In some examples, cooling flow F2 is an air flow, such as another portion of inlet air flow FO. For example, system 100 may be configured to provide a first portion of inlet air flow FO to compressor 120 (e.g., via conduit 128) and provide a second portion of inlet air flow FO to heat exchanger 156 (e.g., via conduit 133). Compressor 120 may be configured to compress (e.g., pressurize) the first portion to produce first flow F1. Compressor 120 may be configured such that first flow F1 (e.g., the compressed first portion) has a greater temperature than inlet flow FO due to, for example, a heat of compression of the first portion. Heat exchanger 156 may be configured to receive the second portion and use the second portion as cooling flow F2, such that heat exchanger 156 causes a heat exchange from first flow F1 to cooling flow F2. Heat exchanger 156 may be configured to issue the thus cooled first flow F1 as compressed air flow FC.

System 100 may be configured to provide cooling flow F2 to heat exchanger 156 in any manner. In some examples, compressor 120 (e.g., compressor housing 131) is configured to receive inlet air flow FO and issue first flow F1 and cooling flow F2. For example, cooling flow F2 may be a portion of inlet air flow FO received by compressor housing 131 and which substantially bypasses at least some portion of compressing element 130. Compressor 120 (e.g., compressor housing 131) may be configured such that first flow F1 (e.g., as a result of compression) has a higher temperature and a higher pressure than cooling flow F2. Heat exchanger 156 may be configured to receive first flow F1 and cooling flow F2 from the second portion and use the second portion as cooling flow F2, such that heat exchanger 156 causes a heat exchange from first flow F1 to cooling flow F2. In other examples, system 100 may be configured to provide cooling flow F2 in other ways. For example, system 100 may include a second air intake (not shown) in addition to air intake 122, with the second air intake configured to receive cooling flow F2. In some examples, system 100 may be configured such that conduit 133 substantially bypasses compressor housing 131 (e.g., branches from conduit 128), rather than receiving cooling flow F2 from compressor housing 131.

In examples, heat exchanger 156 is configured to issue compressed air flow FC (or at least some portion thereof) to a supply conduit 158. Supply conduit 158 may be configured to provide (e.g., deliver) compressed air flow FC to one or more of compartments 112. For example, supply conduit 158 may include a first section 160 (e.g., a first branch) configured to deliver some portion of compressed flow FC to cabin 114. Supply conduit 158 may include a second section 162 (e.g., a second branch) configured to deliver another portion of compressed flow FC to flight deck 116. Supply conduit 158 may include a third section 164 (e.g., a third branch) configured to deliver a different portion of compressed flow FC to cargo hold 118. Supply conduit 158 may include any number of sections configured to supply at least a portion of compressed air flow FC to one or more other compartments of vehicle 102. Supply conduit 158 may include a variety of components for transporting and dispersing the supply air into compartments 112 including, but not limited to supply ducting, supply air vents, gaspers, and the like. The supply ducting, supply air vents, gaspers, and the like may be distributed throughout compartments 112.

System 100 may be configured to substantially recirculate air among compartments 112 of vehicle 102. For example, system 100 may include a return air system (not shown) configured to receive a return air from one or more of compartments 112. System 100 may include one or more mixing manifolds configured to mix compressed flow FC and the return air to, for example, assist in substantially establishing and/or maintaining a relative homogeneity among the atmospheres in compartments 112. In some examples, system 100 includes additional components configured to condition the air flow used to produce compressed air flow FC, such as component 168. Component 168 may be, for example, a component configured to reduce moisture in (e.g., dehumidify) the air flow and/or otherwise condition the air flow used to produce compressed air flow FC.

System 100 may include one or more sensors configured to sense one or more parameters (e.g., temperature and/or pressure) of compressed air flow FC, internal environment EI within cabin 114, and/or an internal environment within another of compartments 112. For example, system 100 may include a sensor 172 configured to sense a temperature associated with compressed flow FC. System 100 may include a sensor 174 configured to sense a pressure associated with compressed flow FC. System 100 may include a sensor 176 configured to sense a differential pressure associated with compressed flow FC.

In some examples, system 100 includes a control system 170 configured to control a pressure and/or other parameters of internal environment EI within cabin 114 and/or other of compartments 112. In examples, control system 170 is configured to control one or more portions of system 100 based on parameters sensed by sensor 172, sensor 174, sensor 176, and/or other sensors within system 100. In examples, control system 170 is configured to control a pressure of one or more of compartments 112 using one or more outflow valves such as outflow valve 178. Outflow valve 178 may be configured to discharge air from one or more of compartments 112 (e.g., cabin 114) to an environment surrounding vehicle 102 (e.g., external environment EO) to control the pressure in compartments 112. In some examples, outflow valve 178 is a thrust recovery valve. System 100 may include any number of outflow valves such as outflow valve 178. Any of the outflow valves may be configured to discharge air from one or more of compartments 112 to an environment surrounding vehicle 102.

In examples, system 100 is configured to control a temperature of compressed air flow FC. For example, system 100 may be configured to provide a trim air FT to control the temperature of compressed flow FC. In some examples, trim air FT may be a portion of first flow F1 and/or cooling flow F2. In examples, system 100 is configured such that trim air FT substantially bypasses at least some portion of heat exchanger 156. Hence, trim air FT may have a higher temperature than compressed air flow FC provided by heat exchanger 156. System 100 (e.g., control system 170) may be configured to substantially control the temperature of compressed air flow FC by causing the mixing of trim air FT with compressed air flow FC (e.g., prior to providing compressed air flow FC to compartments 112). In examples, system 100 includes one or more trim valves such as trim valve 180 configured to control a flow of trim air FT. A position of trim valve 180 may be controlled (e.g., via control system 170) by a thermostat and/or members of a flight crew to control a temperature of compressed flow FC. In some examples, system 100 includes a plurality of trim valves such as trim valve 180 to enable separate temperature control of some of or each of compartments 112.

Hence, in some examples, system 100 is configured to receive inlet air flow FO during a flight phase of vehicle 102. During the flight phase, inlet air flow FO may be at a relatively low pressure (e.g., less than about 5 psi (0.34 Bar)). Compressor 120 configured to receive inlet air flow FO (e.g., at the relatively low pressure) and compress inlet air flow FO, such that system 100 may maintain a pressurized air environment in one or more compartments of compartments 112. Compressor 120 may be configured to compress inlet air flow FO using primary mechanical power M1 provided by motor assembly 134 (e.g., M-G set 137) or secondary mechanical power M2 provided by turbine assembly 144. System 100 is configured to transition compressor 120 from primary mechanical power M1 to secondary mechanical power M2 when input electrical power I1 provided to motor assembly 134 by electrical distribution system 138 is less than a threshold. System 100 includes generator assembly 135 (e.g., M-G set 137) configured to provide output electrical power I2 to electrical distribution system 138 when turbine assembly 144 provides secondary mechanical power M2.

FIG. 3 schematically illustrates system 100 including electrical distribution system 138 and turbine assembly 144 configured to provide a compressor power to compressor 120. As depicted in FIG. 3, a first input shaft 206 defines a portion of input pathway 152 of FIG. 1 and compressor input shaft 143 defines a portion of output pathway 154 of FIG. 1, although this is not required. Turbine 146 includes a plurality of blades 182 ("turbine blades 182") configured to cause a rotational torque on a shaft 184 of turbine 146 ("turbine shaft 184") (e.g., when turbine blades 182 are impacted by ram air flow FR). System 100 is configured to transition (e.g., using clutching mechanism 150) compressor 120 from primary mechanical power M1 from motor assembly 134 to receiving secondary mechanical power M2 produced by turbine 146 (e.g., when input electrical power I1 provided by electrical distribution system 138 falls below a threshold).

For example (e.g., in the primary mode), motor assembly 134 may receive input electrical power I1 and transfer at least one of a rotary torque T or a substantially linear force F to compressor 120 (e.g., compressing element 130) using input electrical power I1, such that compressor 120 provides first flow F1 and/or cooling flow F2. In examples, motor assembly 134 is configured to transfer rotary torque T and/or linear force F using compressor shaft 142. For example, motor assembly 134 may be configured to transfer rotary torque T substantially around an axis LC defined by compressor 120 ("compressor shaft axis LC"). Motor assembly 134 may be configured to transfer linear force F in a direction substantially parallel to compressor shaft axis LC. Compressor 120 may be configured to transfer rotary torque T and/or linear force F from compressor shaft 142 to compressing element 130 to cause movement of compressing element 130 relative to compressor housing 131. Compressing element 130 may be configured to compress at least some portion of inlet air flow FO (e.g., to cause compressor 120 to provide first flow F1 and/or cooling flow F2) when compressing element 130 moves relative to compressor housing 131.

In examples, motor assembly 134 is configured to transfer rotary torque T and/or linear force F to compressor 120 when motor assembly 134 receives input electrical power I1 (e.g., from electrical distribution system 138) above a threshold. The threshold may be, for example, a minimum voltage, a minimum current, and/or a minimum electrical power received by motor assembly 134. The minimum voltage, a minimum current, and/or a minimum electrical power may be substantially zero in some examples, or may be some other non-zero value in other examples.

In some examples, motor assembly 134 includes a controller 186 ("motor controller 186") configured to receive input electrical power I1 and cause motor assembly 134 to transfer rotary torque T and/or linear force F to compressor 120. Motor controller 186 may be configured to cause motor assembly 134 to transfer rotary torque T and/or linear force F when motor controller 186 receives input electrical power I1 (e.g., from electrical distribution system 138) above the threshold. Motor controller 186 may be configured to cause motor assembly 134 to cease transferring rotary torque T and/or linear force F when input electrical power I1 received by motor controller 186 falls below the threshold. In some examples, motor controller 186 includes control circuitry 188 ("motor control circuitry 188") configured to cause motor controller 186 to one of cause motor assembly 134 to transfer rotary torque T and/or linear force F, or cause motor assembly 134 to cease transferring rotary torque T and/or linear force F (e.g., based on input electrical power I1 received by motor controller 186). In some examples, motor control circuitry 188 may be configured to cause motor assembly 134 to one of transfer rotary torque T and/or linear force F or cease transferring rotary torque T and/or linear force F based on a signal (e.g., a fault signal) issued by some portion of electrical distribution system 138, control system 170, and/or other control circuitry of vehicle 102.

In some examples, input shaft axis LI may be substantially parallel to and/or substantially coincident with compressor shaft axis LC. In some examples, input shaft axis LI and compressor shaft axis LC are portions of a substantially unitary shaft extending substantially through compressing element 130 (e.g., through an aperture defined by compressing element 130) and extending to motor assembly 134.

Clutching mechanism 150 is configured to transfer secondary mechanical power M2 (e.g., first portion M2-1 and/or second portion M2-2) from input pathway 152 to output pathway 154, such that compressor 120 may receive first portion M2-1 and/or second portion M2-2 produced by turbine assembly 144. In examples, clutching mechanism 150 is configured to transfer secondary mechanical power M2 when the input electrical power I1 provided by electrical distribution system 138 (e.g., to motor assembly 134) is less than the threshold, such that compressor 120 transitions from compressing inlet flow FO using primary mechanical power M1 to compressing inlet flow FO using secondary mechanical power M2 (e.g., first portion M2-1) (e.g., from turbine assembly 144). In examples, clutching mechanism 150 is configured to transition from the disengaged configuration to the engaged configuration when clutching mechanism 150 causes compressor 120 to transition from primary mechanical power M1 to using secondary mechanical power M2.

As used herein, when clutching mechanism 150 and/or portions thereof, input pathway 152 and/or portions thereof, output pathway 154 and/or portions thereof, and/or compressor 120 and/or portions thereof, receives and/or transfers secondary mechanical power M2, this may mean that clutching mechanism 150 and/or portions thereof, input pathway 152 and/or portions thereof, output pathway 154 and/or portions thereof, and/or compressor 120 and/or portions thereof, receive and/or transfer first portion M2-1, second portion M2-2, or both of first portion M1-1 and second portion M2-2.

In examples, clutching mechanism 150 includes a input shaft 190 ("clutching input shaft 190") and an output shaft 192 ("clutching output shaft 192"). Clutching mechanism 150 may be configured to limit (e.g., to prevent) the transfer of secondary mechanical power M2 (e.g., first portion M2-1 and/or second portion M2-2) from clutching input shaft 190 to clutching output shaft 192 in the disengaged configuration, and/or be configured to increase (e.g., to allow) the transfer of secondary mechanical power M2 (e.g., first portion M2-1 and/or second portion M2-2) from clutching input shaft 190 to clutching output shaft 192 in the engaged configuration.

In some examples, clutching input shaft 190 is coupled to (e.g., mechanically coupled to) input pathway 152. Clutching input shaft 190 may be configured to receive secondary mechanical power M2 from input pathway 152 at least when clutching mechanism 150 is in the engaged configuration. In some examples, clutching input shaft 190 is configured to receive secondary mechanical power M2 from input pathway 152 when clutching mechanism 150 is in the disengaged configuration. Clutching output shaft 192 may be coupled to (e.g., mechanically coupled to) output pathway 154. Clutching output shaft 192 may be configured to provide (e.g., to transfer) secondary mechanical power M2 to output pathway 154 at least when clutching mechanism 150 is in the engaged configuration.

In examples, clutching mechanism 150 includes an input component 196 ("input clutching component 196") and an output component 198 ("output clutching component 198"). Input clutching component 196 may be configured to receive secondary mechanical power M2 from input pathway 152. Input clutching component 196 may be configured to transfer secondary mechanical power M2 received from input pathway 152 (e.g., received via clutching input shaft 190) to output clutching component 198 when clutching mechanism 150 is in the engaged configured. Output clutching component 198 may be configured to transfer secondary mechanical power M2 (e.g., via clutching output shaft 192) to compressor input shaft 143. Input clutching component 196 may be configured to limit (e.g., substantially prevent) the transfer of secondary mechanical power M2 to output clutching component 198 (e.g., even as input clutching component 196 receives secondary mechanical power M2) when clutching mechanism 150 is in the disengaged configuration.

In some examples, input clutching component 196 is configured to contact output clutching component 198 when input clutching component 196 transfers secondary mechanical power M2 to output clutching component 198 (e.g., when clutching mechanism 150 is in the engaged configuration). Input clutching component 196 may be configured to displace relative to output clutching component 198 when input clutching component 196 limits the transfer of secondary mechanical power M2 to output clutching component 198 (e.g., when clutching mechanism 150 is in the disengaged configuration). For example, clutching mechanism 150 may be configured such that one of input clutching component 196 or output clutching component 198 moves away from the other of input clutching component 196 or output clutching component 198 (e.g., to break contact) when clutching mechanism 150 transitions from the engagement configuration to the disengagement configuration. Clutching mechanism 150 may be configured such that one of input clutching component 196 or output clutching component 198 moves toward the other of input clutching component 196 or output clutching component 198 (e.g., to establish contact) when clutching mechanism 150 transitions from the disengagement configuration to the engagement configuration.

Clutch assembly 150 may include any type of clutching mechanism configured to transfer secondary mechanical power M2 from input clutching component 196 to output clutching component 198. For example, clutch assembly 150 may include a plate clutch, a centrifugal clutch, a cone clutch, a dog clutch, a belt clutch, or some other type of clutching mechanism. In some examples, clutch assembly 150 includes an electromagnetic clutch. The electromagnetic clutch may be configured to transfer secondary mechanical power M2 from input clutching component 196 to output clutching component 198 using an electromagnetic field between input clutching component 196 to output clutching component 198. For example, clutching mechanism 150 may be configured such that one of input clutching component 196 or output clutching component 198 comprises a rotor and the other of input clutching component 196 or output clutching component 198 comprises an armature. In examples, clutch assembly 150 is configured such that the rotor receives electrical power produced by electrical distribution system 138.

Clutching mechanism 150 may be configured to substantially maintain the disengaged configuration when input electrical power I1 (e.g., provided to motor assembly 134) is greater than or equal to the threshold. Clutching mechanism 150 may be configured to transition from the disengaged configuration to the engaged configuration when input electrical power 11 decreases below the threshold. In some examples, clutching mechanism 150 is configured to transition from the engaged configuration to the disengaged configuration when input electrical power I1 increases from a level below the threshold to level equal to or greater than the threshold. In some examples, clutch assembly 150 includes an transfer system 202 configured to cause clutching mechanism 150 to substantially maintain the disengaged configuration, transition from the disengagement configuration to the engagement configuration, and/or transition from the engagement configuration to the disengagement configuration.

Transfer system 202 may be configured to cause clutching mechanism 150 to substantially maintain the disengaged configuration, transition from the disengagement configuration to the engagement configuration, substantially maintain the engagement configuration, and/or transition from the engagement configuration to the disengagement configuration. In examples, transfer system 202 is configured to cause clutching mechanism 150 to substantially maintain the disengaged configuration when input electrical power I1 is greater than or equal to the threshold, substantially maintain the engagement configuration when input electrical power I1 is below the threshold, and/or transition from the disengagement configuration to the engagement configuration when input electrical power I1 decreases from a level greater than or equal to the threshold to a level less than the threshold. In some examples, transfer system 202 is configured to cause clutching mechanism 150 to transition from the engagement configuration to the disengagement configuration when input electrical power I1 increases from the level less than the threshold to the level equal to or greater than threshold.

In examples, transfer system 202 is configured to sense input electrical power I1 provided by electrical distribution system 138 via one or more cables 204 ("cables 204"). Transfer system 202 may be configured to establish a first state (e.g., an energized state) when electrical distribution system 138 senses input electrical power I1 is greater than or equal to the threshold, and establish a second state (e.g., a deenergized state) when input electrical power I1 is below the threshold. Transfer system 202 may be configured to cause clutching mechanism 150 to substantially maintain one of the engaged configuration or the disengaged configuration in the first state, cause clutching mechanism 150 to substantially maintain the other of the engaged configuration or the disengaged configuration in the second state, and cause clutching mechanism 150 to transition between the engaged configuration and the disengaged configuration when transfer system 202 transitions between the first state and the second state.

For example, transfer system 202 may include a pneumatic and/or hydraulic system configured to cause clutching mechanism 150 to at least one of substantially maintain the disengaged configuration, substantially maintain the engaged configuration, and/or transition between the disengagement configuration and the engagement configuration using a fluid pressure in the pneumatic and/or hydraulic system. Transfer system 202 may be configured to alter the fluid pressure based on electrical power EP provided by electrical distribution system 138 (e.g., to motor assembly 134). Transfer system 202 may include one or components (e.g., one or more valves) configured to alter their position (e.g., to open or close) when transfer system 202 transitions between the first state and the second state. Transfer system 202 may be configured such that altering the position of the component alters the fluid pressure in the pneumatic and/or hydraulic system, and causes clutching mechanism 150 to transition between the disengagement configuration and the engagement configuration. In some examples, (e.g., when clutching mechanism 150 includes an electromagnetic clutch), transfer system 202 may be configured to alter an electromagnetic field between input clutching component 196 to output clutching component 198 based on electrical power EP provided by electrical distribution system 138 (e.g., to motor assembly 134).

Transfer system 202 may include one or electrical and or electronic components (e.g., one or more switches or relays) configured to provide and/or interrupt a delivery of electrical power to transfer system 202 based on input electrical power I1 provided by electrical distribution system 138. The electrical and/or electronic components may be configured to alter their position (e.g., transition between an open position or a closed position) when transfer system 202 transitions between the first state and the second state. Transfer system 202 may be configured such that altering the position of the electrical and/or electronic components causes clutching mechanism 150 to transition between the disengagement configuration and the engagement configuration.

In some examples, control system 170 is configured to cause transfer system 202 to maintain the first state, maintain the second state, and/or transition between the first state and the second state. For example, control system 170 may be configured to sense input electrical power I1 provided by electrical distribution system 138 (e.g., via one or more cables 205 ("cables 205")). Control system 170 may be configured to detect when input electrical power I1 is greater than or equal to the threshold or less than the threshold using cables 205. Control system 170 may be configured to cause transfer system 202 to establish the first state when control system 170 senses (e.g., using cables 205) that input electrical power I1 is greater than or equal to the threshold. Control system 170 may be configured to cause transfer system 202 to establish the second state when control system 170 senses (e.g., using cables 205) that input electrical power I1 is below the threshold. In examples, control system 170 is configured to send a signal (e.g., via a communication link 207) to transfer system 202 to cause transfer system 202 to maintain the first state, maintain the second state, and/or transition between the first state and the second state. Transfer system 202 may include transfer system control circuitry (not shown) configured to cause transfer system 202 to maintain the first state, maintain the second state, and/or transition between the first state and the second state based on the signal (or lack thereof).

In examples, input pathway 152 comprises one or more mechanical components configured to transfer mechanical power MP from turbine assembly 144 (e.g., turbine 146) to clutching mechanism 150. For examples, input pathway 152 may include a first shaft 206 ("first input shaft 206") configured to provide at least some portion of input pathway 152. In examples, first input shaft 206 is configured to receive at least some portion of secondary mechanical power M2 produced by turbine 146 and transfer the portion of secondary mechanical power M2 to another portion of input pathway 152 and/or clutching mechanism 150. In some examples, first input shaft 206 is comprises at least a portion of a mechanical pathway configured to transfer the portion of secondary mechanical power M2 to a second shaft 208 of input pathway 152 ("second input shaft 208").

In examples, input pathway 152 is configured to receive secondary mechanical power M2 from turbine assembly 144 as an input rotational power T1 acting around a first axis L1 and transfer mechanical power PM to clutching mechanism 150 as an output rotational power T2 acting around a second axis L2 different from first axis L1. In examples, second axis L2 is angularly displaced from first axis L1. In some examples, input pathway 152 includes a gear assembly 210 configured to receive input rotational power T1 acting around first axis L1 and provide output rotational power T2 acting around second axis L2. Gear assembly 210 may include, for example, one or more bevel gears or other types of gears configured to receive input rotational power T1 acting around first axis L1 and provide output rotational power T2 acting around second axis L2. In some examples, first input shaft 206 defines first axis L1. Second input shaft 208 may define second axis L2. In examples, input pathway 152 is configured to secondary mechanical power M2 from turbine assembly 144 to clutching mechanism 150 as at least one of input rotational power T1 or output rotational power T2.

Clutching mechanism 150 (e.g., input clutching component 196) is configured to receive at least one of input rotational power T1 or output rotational power T2 from input pathway 152. Clutching mechanism 150 may be configured to transfer the at least one of input rotational power T1 or output rotational power T2 from input clutching component 196 to output clutching component 198 (e.g., when clutching mechanism 150 is in the engaged configuration). Output clutching component 198 may be configured to transfer the at least one of input rotational power T1 or output rotational power T2 to compressor input shaft 143, such that the at least one of input rotational power T1 or output rotational power T2 provides secondary mechanical power M2 to compressor 120.

In some examples, input pathway 152 includes a speed changer 211 configured to convert at least one of input rotational power T1 or output rotational power T2 from a first a rotational speed to a second rotational speed. The second speed may be one of greater than or less than the first speed. In some examples, speed changer 211 comprises a plurality of gears (e.g., a gearbox, a harmonic drive, or another plurality of gears and/or splines) configured to convert output torque TO from the first rotational speed to the second rotational speed.

In some examples, output pathway 154 includes a coupling system 213 configured to transfer secondary mechanical power M2 from clutching mechanism 150 (e.g., clutching output shaft 192) to compressor 120 (e.g., compressor input shaft 143). Coupling system 213 may be configured to transfer secondary mechanical power M2 such that compressor 120 receives secondary mechanical power M2 as rotary input torque TI and/or linear input force FI. In examples, coupling system 213 includes one or more components such as shafts, linkages, gears, and/or other components configured to transfer secondary mechanical power M2 from clutching mechanism 150 to compressor 120. In examples, coupling system 213 is configured to substantially transfer input torque TI and/or linear input force FI from clutching output shaft 192 to compressor input shaft 143.

In examples, system 100 is configured to cause turbine assembly 144 to deploy when input electrical power I1 falls below the threshold, such that turbine assembly 144 may generate secondary mechanical power M2 and provide at least first portion M2-1 to compressor 120 (e.g., compressing element 130) and/or second portion M2-2 to generator assembly 135.. For example, turbine assembly 144 may be configured to establish a deployed configuration (as depicted in solid lines in FIG. 3) and a stowed configuration (as depicted in dashed lines in FIG. 3). Turbine assembly 144 may be configured such that turbine 146 (e.g., turbine blades 182) receives ran air flow FR in the deployed configuration. Turbine assembly 144 may be configured to limit (e.g., substantially prevent) the receipt of ram air flow FR by turbine 146 (e.g., turbine blades 182) in the stowed configuration. For example, turbine assembly 144 may be configured such that turbine 146 is positioned within a stowage bay 212 in the stowed configuration. Turbine assembly 144 may be configured such that turbine 146 is positioned substantially outside of (e.g., is extended from) stowage bay 212 in the deployed configuration. In examples, turbine assembly 144 is configured to transition from the stowed configuration to the deployed configuration when input electrical power I1 falls below the threshold.

For example, turbine assembly 144 may include a support system 214 which includes a support member 216. Support member 216 may be configured to support turbine 146. In examples, support member 216 is configured to position in a first position relative to fuselage 104 when turbine assembly 144 is in the deployed configuration, position in a second position relative to fuselage 104 when turbine assembly 144 is in the stowed configuration, and/or transition between the first position and the second position when turbine assembly 144 transitions between the deployed configuration and the stowed configuration.

Hence, system 100 may be configured such that, when electrical distribution system 138 is providing input electrical power I1 (e.g., to motor assembly 134) at a level greater than or equal to the threshold, turbine assembly 144 retains support member 216 in the second position (e.g., as depicted by dashed lines in FIG. 2), such that the receipt of ram air flow FR by turbine 146 is limited and secondary mechanical power M2 provided to compressing element 130 and/or generator assembly 135 is limited (e.g., substantially absent). System 100 may be configured such that, when the input electrical power I1 falls below the threshold, turbine assembly 144 transitions support member 216 from the second position to the first position (e.g., as depicted by solid lines in FIG. 2), such that the receipt of ram air flow FR by turbine 146 increases and secondary mechanical power M2 provided to compressing element 130 and/or generator assembly 135 increases. Thus, system 100 may be configured such that, when input electrical power I1 falls below the threshold, system 100 causes turbine assembly 144 to transition from the stowed configuration to the deployed configuration, such that turbine assembly 144 may provide secondary mechanical power M2 to compressing element 130 and/or generator assembly 135.

In examples, support system 214 is configured to cause support member 216 to move relative to some portion of vehicle 102 when support member 216 transitions between the first position and the second position. For example, support member 216 may be configured to move relative to a bulkhead 218 (e.g., a pressure bulkhead) comprising a portion of and/or supported by fuselage 104 of vehicle 102. Bulkhead 218 may be configured to maintain internal atmosphere EI (FIG. 1) within one or more of compartments 112 greater than or equal to external atmosphere EO substantially external to and/or surrounding vehicle 102 (e.g., when vehicle 102 is in flight).

In some examples, bulkhead 218 is a portion of a boundary 220 substantially defining stowage bay 212. In examples, at least some portion of input pathway 152 (e.g., first input shaft 206 and/or another mechanical component of input pathway 152) is configured to pass through bulkhead 218 to deliver secondary mechanical power M2 to clutching mechanism 150. For example, the portion of input pathway 152 may be configured to extend through an access 222 (e.g., defined by bulkhead 218) to pass through bulkhead 218. Bulkhead 218 may be configured to maintain internal atmosphere EI greater than or equal to external atmosphere EO as input pathway 152 passes through bulkhead 218. In some examples, input pathway 152 includes a pressure seal 224 configured to assist in maintaining internal atmosphere EI greater than or equal to external atmosphere EO as the portion of input pathway 152 passes through bulkhead 218. In some examples, pressure seal 224 may be, for example, a fairlead, a stuffing tube, a packing, or some other type of pressure seal.

Turbine assembly 144 may include an positioning system 226 configured to cause turbine assembly 144 to substantially maintain the stowed configuration, maintain the deployed configuration, and/or transition between the stowed configuration and the deployed configuration. In examples, positioning system 226 is configured to turbine assembly 144 to substantially maintain the stowed configuration, maintain the deployed configuration, and/or transition between the stowed configuration and the deployed configuration based on input electrical power I1 provided by electrical distribution system 138 (e.g., provided to motor assembly 134).

For example, positioning system 226 may be configured to sense input electrical power I1 provided by electrical distribution system 138. Positioning system 226 may be configured to establish a first system state (e.g., an energized state) when electrical distribution system 138 senses electrical power EP is greater than or equal to the threshold, and establish a second system state (e.g., a deenergized state) when electrical power EP is below the threshold. Positioning system 226 may be configured to cause turbine assembly 144 to substantially maintain one of the stowed configuration or the deployed configuration in the first system state, cause turbine assembly 144 to substantially maintain the other of the stowed configuration or the deployed configuration in the second system state, and cause turbine assembly 144 to transition between the stowed configuration engaged configuration and the disengaged configuration when positioning system 226 transitions between the first system state and the second system state.

For example, positioning system 226 may include a pneumatic and/or hydraulic system configured to cause turbine assembly 144 to at least one of substantially maintain the stowed configuration, substantially maintain the deployed configuration, and/or transition between the stowed configuration and the deployed configuration using a fluid pressure in the pneumatic and/or hydraulic system. Positioning system 226 may be configured to alter the fluid pressure based on input electrical power I1 provided by electrical distribution system 138 (e.g., to motor assembly 134). Positioning system 226 may include one or components (e.g., one or more valves) configured to alter their position (e.g., to open or close) when positioning system 226 transitions between the first system state and the second system state. Positioning system 226 may be configured such that altering the position of the component alters the fluid pressure in the pneumatic and/or hydraulic system, and causes turbine assembly 144 to transition between the stowage configuration and the deployed configuration.

In some examples, positioning system 226 includes one or electrical and or electronic components (e.g., one or more switches or relays) configured to provide and/or interrupt a delivery of electrical power to positioning system 226 based on input electrical power I1 provided by electrical distribution system 138. The electrical and/or electronic components may be configured to alter their position (e.g., transition between an open position or a closed position) when positioning system 226 transitions between the first system state and the second system state. Transfer system 202 may be configured such that altering the position of the electrical and/or electronic components causes turbine assembly 144 to transition between the stowage configuration and the deployed configuration.

In some examples, control system 170 is configured to cause positioning system 226 to maintain the first system state, maintain the second system state, and/or transition between the first system state and the second system state. For example, control system 170 may be configured to cause positioning system 226 to establish the first system state when control system 170 senses (e.g., using cables 205) that input electrical power I1 is greater than or equal to the threshold. Control system 170 may be configured to cause positioning system 226 to establish the second system state when control system 170 senses (e.g., using cables 205) that input electrical power I1 is below the threshold. In examples, control system 170 is configured to send a signal (e.g., via a communication link 209) to positioning system 226 to cause positioning system 226 to maintain the first system state, maintain the second system state, and/or transition between the first system state and the second system state. Positioning system 226 may include positioning system control circuitry (not shown) configured to cause positioning system 226 to maintain the first system state, maintain the second system state, and/or transition between the first system state and the second system state based on the signal (or lack thereof) to positioning system 226.

In some examples, system 100 includes a user input device 228 (e.g., a switch, button, touchscreen, or the like) operable by, for example, a flight crew member or maintenance member and configured to cause clutching mechanism 150 to transition between the disengaged configuration and the engaged configuration and/or cause turbine assembly 144 to transition between the stowage configuration and the deployed configuration. User input device 228 may be configured such that a user can provide input to one or more of control system 170, clutching mechanism 150, and/or turbine assembly 144. In response to receiving the user input (e.g., via a communication link 230), control system 170 may be configured to cause clutching mechanism 150 to transition between the disengaged configuration and the engaged configuration and/or cause turbine assembly 144 to transition between the stowage configuration and the deployed configuration. In response to receiving the user input (e.g., via a communication link 232), clutching mechanism 150 may be configured to transition between the disengaged configuration and the engaged configuration. In response to receiving the user input (e.g., via a communication link 234), turbine assembly 144 (e.g., positioning system 226) may be configured to cause turbine assembly 144 to transition between the stowage configuration and the deployed configuration.

Control system 170 , control circuitry 188, and/or other control circuitry of system 100 may include fixed function circuitry and/or programmable operating circuitry. In examples, control system 170 , control circuitry 188, and/or other control circuitry of system 100 includes circuitry configured to perform one or more functions of operating circuitry, such as sensing circuitry, processing circuitry, switching circuitry, communication circuitry, and/or other circuitries. Control system 170 , control circuitry 188, and/or other control circuitry of system 100, as well as other processors, operating circuitry, controllers, control circuitry, processing circuitry, and the like, described herein, may include any combination of integrated circuitry, discrete logic circuity, analog circuitry, such as one or more microprocessors, digital signal processors (DSPs), application specific integrated circuits (ASICs), or field-programmable gate arrays (FPGAs). In some examples, control system 170 includes multiple components, such as any combination of one or more microprocessors, one or more DSPs, one or more ASICs, or one or more FPGAs, as well as other discrete or integrated logic circuitry, and/or analog circuitry.

Functions attributed to control system 170 , control circuitry 188, and/or other control circuitry of system 100 may be embodied as software, firmware, hardware or any combination thereof. Control system 170 , control circuitry 188, and/or other control circuitry of system 100 may include, for instance, a variety of capacitors, transformers, switches, and the like configured to perform the functions of control system 170 , control circuitry 188, and/or other control circuitry of system 100. In examples, control system 170 , control circuitry 188, and/or other control circuitry of system 100 may be configured to communicate with another device of system 100 and/or vehicle 102, such as electrical distribution system 138, clutching mechanism 150, turbine assembly 144, compressor 120, and/or components of system 100 and/or vehicle 102. Control system 170 , control circuitry 188, and/or other control circuitry of system 100 may include any suitable hardware, firmware, software or any combination thereof for communicating with another device. In addition, control system 170 , control circuitry 188, and/or other control circuitry of system 100 may communicate with a networked computing device and a computer network.

System 100 (e.g., control system 170 , control circuitry 188, and/or other control circuitry of system 100) can also include memory configured to store program instructions, such as software, which may include one or more program modules, which are executable by control system 170 , control circuitry 188, and/or other control circuitry of system 100. The program instructions may be embodied in software and/or firmware. The memory can include any volatile, non-volatile, magnetic, optical, or electrical media, such as a random access memory (RAM), read-only memory (ROM), non-volatile RAM (NVRAM), electrically-erasable programmable ROM (EEPROM), ferroelectric RAM (FRAM), flash memory, or any other digital media. In some examples, the memory includes computer-readable instructions that, when executed by control system 170 cause control system 170 , control circuitry 188, and/or other control circuitry of system 100 to perform various functions described herein and/or other functions of control system 170 , control circuitry 188, and/or other control circuitry of system 100.

User input device 228 may have any suitable configuration. For example, user input device 228 can include a switch (e.g., a mechanical switch), a button or keypad, a speaker configured to receive voice commands from a user, a display, such as a liquid crystal (LCD), light-emitting diode (LED), or organic light-emitting diode (OLED). In some examples, user input device 228 may include a touch screen. User input device 228 may be configured to receive a user input. In some examples, user input device 228 is also configured to display information, such as one or more indications providing information on the actuation of system 100 (e.g., clutching mechanism 150 and/or turbine assembly 144).

Communication links 207, 209, 230, 232, 234 may be wired and/or wireless communications links. In some examples, communication links 207, 209, 230, 232, 234 may comprise some portion of control system 170 . In some examples, communication links 207, 209, 230, 232, 234 comprise a wired connection, a wireless Internet connection, a direct wireless connection such as wireless LAN, Bluetooth^{™}, Wi-Fi^{™}, and/or an infrared connection. Communication links 207, 209, 230, 232, 234 may utilize any wireless or remote communication protocol.

As used here, when a first portion of a system (e.g., system 100) is substantially parallel to a second portion of or an axis defined by the system, this may mean the first portion is parallel or nearly parallel to the second portion or the axis to the extent permitted by manufacturing tolerances. In some examples, when the first portion is substantially parallel to the second portion or the axis, this may mean a first vector defined by the first component of the system defines an angle of less than 10 degrees, in some examples less than 5 degrees, and in some examples less than 1 degree, with a second vector defined by the second component or the axis.

As used here, when a first portion of a system (e.g., system 100) supports a second portion of the system, this means that when the second portion causes a first force to be exerted on the first portion, the first portion causes a second force to be exerted on the second portion in response to the first force. The first force and/or second force may be a contact force and/or an action-at-a-distance force. For example, first force and/or second force may be mechanical force, a magnetic force, a gravitational force, or some other type of force. The first portion of the system may be a portion of the system or a portion of a component of the system. The second portion of the system may be another portion of the system or another portion of the same component or a different component. In some examples, when the first portion of the system supports the second portion of the system, this may mean the second portion is mechanically supported by and/or mechanically connected to the first portion.

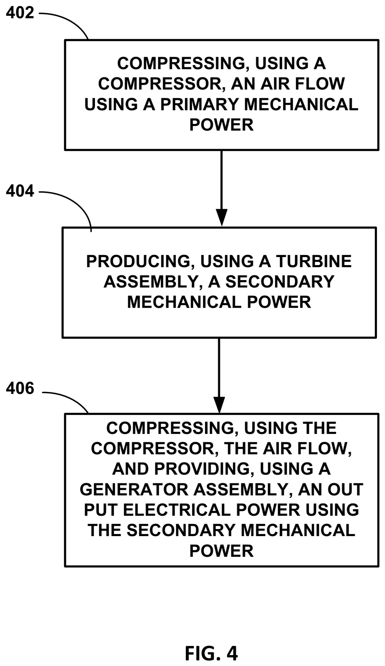

FIG. 4 is a flow diagram illustrating an example technique for providing a compressed air flow FC to compartments 112 of a vehicle 102. While the technique is described with reference to system 100 described herein, the technique may be used with other components and/or systems in other examples.

The technique includes compressing, by a compressor 120 using a primary mechanical power M1, an inlet air flow FO (402). A motor assembly 134 may produce primary mechanical power M1. In examples, motor assembly 134 produces primary mechanical power M1 using an input electrical power I1. An electrical distribution system 138 may provide input electrical power I1 to motor assembly 134. In examples, a stator 183 of motor assembly 134 (e.g., M-G set 137) receives input electrical power I1. In examples, a rotor 185 of motor assembly 134 (e.g., M-G set 137) produces primary mechanical power M1. Motor assembly 134 may transfer primary mechanical power M1 to a compressor 120 using rotor 185. In examples, motor assembly 134 transfers primary mechanical power M1 to compressor 120 using a compressor shaft 142 of compressor 120.

The technique includes producing, using a turbine assembly 144, a secondary mechanical power M2 (404). In examples, turbine assembly 144 produces secondary mechanical power M2 when input electrical power I1 decreases below a threshold. A clutching mechanism 150 may transfer a first portion M2-1 of secondary mechanical power M2 to compressor 120 (e.g., via output pathway 154) and/or transfer a second portion M2-2 to a generator assembly 135 (e.g., via input pathway 152 or output pathway 154). In examples, clutching mechanism 150 transitions from a disengaged configuration to an engaged configuration to transfer first portion M2-1 and/or second portion M2-2.

In examples, clutching mechanism 150 limits the delivery of first portion M2-1 to compressor 120 and/or limits the delivery of second portion M2-2 to generator assembly 135 from turbine assembly 144 in the disengaged configuration and increases the delivery of first portion M2-1 to compressor 120 and/or increases the delivery of second portion M2-2 to generator assembly 135 in the engaged configuration. In examples, clutching mechanism 150 transitions from the disengaged configuration to the engaged configuration when input electrical power I1 decreases below the threshold.

The technique includes compressing, by compressor 120 using the first portion M2-1, inlet air flow FO, and providing, by generator assembly 135 using second portion M2-2, an output electrical power I2 (406). In examples, compressing element 130 receives first portion M2-1. Generator assembly 135 may provide output electrical power I2 to electrical distribution system 138. In examples, a rotor 185 of generator assembly 135 (e.g., M-G set 137) receives second portion M2-2. A stator 183 (e.g., windings 187) of generator assembly 135 (e.g., M-G set 137) may provide output electrical power I2. In examples, compressor 120 receives at least first portion M2-1 using compressor input shaft 143 of compressor 120. In examples, compressor 120 receives first portion M2-1 and second portion M2-2 using compressor input shaft 143. In some examples, compressor 120 transfers second portion M2-2 to generator assembly 135 using compressor shaft 142.

In examples, a turbine 146 of turbine assembly 144 generates the mechanical power MP. Turbine 146 may generate the mechanical power MP when turbine 146 receives a ram air flow FR. In examples, turbine 146 generates the mechanical power MP when ram air flow FR impacts turbine blades 182. In some examples, turbine assembly 144 allows the receipt of ram air flow FR by turbine blades 182 in a deployed configuration and limits the receipt of ran air flow FR by turbine blades 182 in a stowed configuration. In examples, a positioning system 226 causes turbine assembly 144 to transition from the stowed configuration to the deployed configuration when the electrical power EP decreases below the threshold.

The disclosure includes the following examples.

Example 1: A system comprising: a motor assembly configured to produce a primary mechanical power when the motor assembly receives an input electrical power from an electrical distribution system of a vehicle, a turbine assembly configured to couple to a vehicle body of the vehicle, wherein the turbine assembly includes a turbine configured to produce a secondary mechanical power when the turbine receives a ram air flow; a compressing element configured to compress an inlet air flow using at least one of the primary mechanical power or a first portion of the secondary mechanical power; a generator assembly configured to provide an output electrical power to the electrical distribution system when the generator assembly receives a second portion of the secondary mechanical power; and a clutching mechanism having a disengaged configuration and an engaged configuration, wherein the clutching mechanism is configured to limit a delivery of at least one of the first portion to the compressing element or the second portion to the generator assembly in the disengaged configuration and increase the delivery of the at least one of the first portion to the compressing element or the second portion to the generator assembly in the engaged configuration, and wherein the clutching mechanism is configured to transition from the disengaged configuration to the engaged configuration when the input electrical power decreases below a threshold.

Example 2: The system of example 1, wherein the motor assembly and the generator assembly comprise a motor-generator.

Example 3: The system of example 2, wherein the motor-generator comprises a stator and a rotor configured to rotate relative to the stator, wherein the rotor is configured to produce the primary mechanical power when the stator receives the input electrical power, and wherein the stator is configured to produce the output electrical power when the rotor receives the second portion of the secondary mechanical power.

Example 4: The system of any of examples 1-3, further comprising a control system configured to monitor the input electrical power and cause, in response to the input electrical power decreasing below the threshold, the clutching mechanism to transition from the disengaged configuration to the engaged configuration.

Example 5: The system of any of examples 1-4, wherein the turbine assembly is configured to establish a deployed configuration and a stowed configuration, wherein the turbine is configured to receive the ram air flow when the turbine assembly is in the deployed configuration, and wherein the turbine assembly is configured to limit a receipt of the ram air flow by the turbine in the stowed configuration.

Example 6: The system of example 5, wherein the turbine assembly is configured to transition from the stowed configuration to the deployed configuration when the input electrical power decreases below the threshold.

Example 7: The system of example 6, wherein the turbine assembly includes a support member coupled to the turbine, wherein: the support member is configured to position in a first position relative to the vehicle body and configured to position in a second position relative to the vehicle body, the support member is configured to place the turbine assembly in the stowed configuration when the support member is in the second position and configured to place the turbine assembly in the deployed configuration when the support member is in the first position, and the support member is configured to transition from the second position to the first position when the input electrical power provided by the electrical distribution system decreases below the threshold.

Example 8: The system of any of examples 1-7, further comprising a generator controller configured to limit at least one of a voltage or a current provided from generator assembly to the electrical distribution system when the generator assembly provides the output electrical power.

Example 9: The system of any of examples 1-8, further comprising a permanent magnet assembly comprising the generator assembly, wherein the permanent magnet assembly is configured to cause the generator assembly to provide the output electrical power when the generator assembly receives the second portion of the secondary mechanical power.

Example 10: The system of example 9, wherein the permanent magnet assembly further comprises the motor assembly, wherein the permanent magnet assembly is configured to cause the motor assembly to produce the primary mechanical power when the motor assembly receives the input electrical power.

Example 11: The system of any of examples 1-10, wherein the turbine is a ram air turbine including a plurality of blades coupled to a shaft, wherein the turbine is configured to cause the ram air flow to impact the plurality of blades when the turbine receives the ram air, and wherein the plurality of blades are configured to cause rotation of the shaft when the ram air flow impacts the plurality of blades.

Example 12: The system of any of examples 1-11, further comprising a gear assembly, wherein the gear assembly is configured to receive at least the second portion of the secondary mechanical power from the turbine assembly as an input rotational power acting around a first axis, wherein the gear assembly is configured to transfer at least the second portion of the secondary mechanical power to the clutching mechanism as an output rotational power acting around a second axis, and wherein the second axis is angularly displaced from the first axis.

Example 13: The system of any of examples 1-12, further comprising the vehicle body, wherein the vehicle body supports at least the turbine assembly, the compressing element, and the clutching mechanism.

Example 14: The system of any of examples 1-13, wherein the compressing element comprises a compressor configured to provide the inlet air flow compressed by the compressing element to a compartment supported by the vehicle.

Example 15: The system of any of examples 1-14, further comprising: a control system configured to monitor a pressure in a compartment supported by the vehicle; and an outflow valve configured to issue a discharge air flow comprising the inlet air flow compressed by the compressing element from the compartment to an external environment surrounding the vehicle body, wherein the control system is configured to control a position of the outflow valve based on the pressure in the compartment.

Example 16: A system comprising: a motor-generator comprising: a motor assembly configured to produce a primary mechanical power when the motor assembly receives an input electrical power from an electrical distribution system of a vehicle, and a generator assembly configured to provide an output electrical power to the electrical distribution system; a turbine assembly including a turbine, the turbine assembly configured to establish a deployed configuration relative to an aircraft body of an aircraft and establish a stowed configuration relative to the aircraft body, wherein the turbine is configured to receive a ram air flow and produce a secondary mechanical power using the ram air flow when the turbine assembly is in the deployed configuration, and wherein the turbine assembly is configured to limit a receipt of the ram air flow by the turbine when the turbine assembly is in the stowed configuration; a compressing element configured to compress an inlet air flow to provide a compressed air flow to a compartment of the vehicle, wherein the compressing element is configured to compress the inlet air flow using at least one of the primary mechanical power or a first portion of the secondary mechanical power, and wherein the generator assembly is configured to receive a second portion of the secondary mechanical power to provide the output electrical power; and a clutching mechanism having an engaged configuration and a disengaged configuration, wherein the clutching mechanism is configured to limit a delivery of the mechanical power from the turbine to the compressing element in the disengaged configuration and increase the delivery of the mechanical power from the turbine to the compressing element in the engaged configuration, wherein the clutching mechanism is configured to transition from the disengaged configuration to the engaged configuration when the input electrical power decreases below a threshold, and wherein the turbine assembly is configured to transition from the stowed configuration to the deployed configuration when the input electrical power decreases below the threshold.

Example 17: The system of example 16, further comprising a heat exchanger, wherein the compressing element comprises a compressor, the compressor configured to compress a first portion of the inlet air flow to provide the compressed air flow and provide a second portion of the inlet air flow to the heat exchanger, wherein the heat exchanger is configured to receive the compressed air flow from the compressor and cause a heat transfer from the compressed air flow to the second portion of the inlet air flow to produce a cooled compressed flow, and wherein the heat exchanger is configured to provide the cooled compressed flow to the compartment.

Example 18: The system of example 16 or example 17, further comprising: a control system configured to monitor a pressure in the compartment; and an outflow valve configured to issue a discharge air flow comprising the compressed air flow from the compartment to an external environment surrounding the aircraft body, wherein the control system is configured to control a position of the outflow valve based on the pressure in the compartment.

Example 19: A method, comprising: producing, using a motor assembly receiving an input electrical power from an electrical distribution system of a vehicle, a primary mechanical power; compressing, using a compressing element receiving the primary mechanical power, an inlet air flow, wherein the compressing element is configured to compress the inlet air flow using at least one of the primary mechanical power or a secondary mechanical power; producing, when the input electrical power decreases below a threshold, and by transitioning a clutching mechanism from a disengaged configuration to an engaged configuration, the secondary mechanical power using a turbine assembly; and causing the compressing element to compress the inlet air flow using a first portion of the secondary mechanical power and causing a generator assembly to provide an output electrical power to the electrical distribution system using a second portion of the secondary mechanical power, wherein the clutching mechanism is configured to limit a delivery of the secondary mechanical power from the turbine assembly to the compressing element and the generator assembly in the disengaged configuration and increase the delivery of the secondary mechanical power from the turbine assembly to the compressing element and the generator assembly in the engaged configuration.

Example 20: The method of example 19, further comprising causing, using the system, the turbine assembly to transition from a stowed configuration to a deployed configuration when the input electrical power decreases below the threshold, wherein a turbine of the turbine assembly is configured to receive a ram air flow and produce the secondary mechanical power using the ram air flow when the turbine assembly is in the deployed configuration, and wherein the turbine assembly is configured to limit a receipt of the ram air flow by the turbine when the turbine assembly is in the stowed configuration

Various examples have been described. These and other examples are within the scope of the following claims.

## Claims

1. A system comprising:
a motor assembly configured to produce a primary mechanical power when the motor assembly receives an input electrical power from an electrical distribution system of a vehicle,
a turbine assembly configured to couple to a vehicle body of the vehicle, wherein the turbine assembly includes a turbine configured to produce a secondary mechanical power when the turbine receives a ram air flow;
a compressing element configured to compress an inlet air flow using at least one of the primary mechanical power or a first portion of the secondary mechanical power;
a generator assembly configured to provide an output electrical power to the electrical distribution system when the generator assembly receives a second portion of the secondary mechanical power; and
a clutching mechanism having a disengaged configuration and an engaged configuration, wherein the clutching mechanism is configured to limit a delivery of at least one of the first portion to the compressing element or the second portion to the generator assembly in the disengaged configuration and increase the delivery of the at least one of the first portion to the compressing element or the second portion to the generator assembly in the engaged configuration, and wherein the clutching mechanism is configured to transition from the disengaged configuration to the engaged configuration when the input electrical power decreases below a threshold.

2. The system of claim 1,
wherein the motor assembly and the generator assembly comprise a motor-generator,
wherein the motor-generator comprises a stator and a rotor configured to rotate relative to the stator,
wherein the rotor is configured to produce the primary mechanical power when the stator receives the input electrical power, and
wherein the stator is configured to produce the output electrical power when the rotor receives the second portion of the secondary mechanical power.

3. The system of claim 1 or 2, further comprising a control system configured to monitor the input electrical power and cause, in response to the input electrical power decreasing below the threshold, the clutching mechanism to transition from the disengaged configuration to the engaged configuration.

4. The system of any of claims 1 to 3,
wherein the turbine assembly is configured to establish a deployed configuration and a stowed configuration,
wherein the turbine is configured to receive the ram air flow when the turbine assembly is in the deployed configuration, and
wherein the turbine assembly is configured to limit a receipt of the ram air flow by the turbine in the stowed configuration.

5. The system of claim 4, wherein the turbine assembly is configured to transition from the stowed configuration to the deployed configuration when the input electrical power decreases below the threshold.

6. The system of claim 5,
wherein the turbine assembly includes a support member coupled to the turbine, and
wherein the support member is configured to:
position in a first position relative to the vehicle body and configured to position in a second position relative to the vehicle body,
place the turbine assembly in the stowed configuration when the support member is in the second position and configured to place the turbine assembly in the deployed configuration when the support member is in the first position, and
transition from the second position to the first position when the input electrical power provided by the electrical distribution system decreases below the threshold.

7. The system of any of claims 1 to 6, further comprising a generator controller configured to limit at least one of a voltage or a current provided from generator assembly to the electrical distribution system when the generator assembly provides the output electrical power.

8. The system of any of claims 1 to 7, further comprising a permanent magnet assembly comprising the generator assembly, wherein the permanent magnet assembly is configured to cause the generator assembly to provide the output electrical power when the generator assembly receives the second portion of the secondary mechanical power.

9. The system of claim 8,
wherein the permanent magnet assembly further comprises the motor assembly, and
wherein the permanent magnet assembly is configured to cause the motor assembly to produce the primary mechanical power when the motor assembly receives the input electrical power.

10. The system of any of claims 1 to 9,
wherein the turbine is a ram air turbine including a plurality of blades coupled to a shaft,
wherein the turbine is configured to cause the ram air flow to impact the plurality of blades when the turbine receives the ram air, and
wherein the plurality of blades are configured to cause rotation of the shaft when the ram air flow impacts the plurality of blades.

11. The system of any of claims 1 to 10, further comprising a gear assembly,
wherein the gear assembly is configured to receive at least the second portion of the secondary mechanical power from the turbine assembly as an input rotational power acting around a first axis,
wherein the gear assembly is configured to transfer at least the second portion of the secondary mechanical power to the clutching mechanism as an output rotational power acting around a second axis, and
wherein the second axis is angularly displaced from the first axis.

12. The system of any of claims 1 to 11, wherein the compressing element comprises a compressor configured to provide the inlet air flow compressed by the compressing element to a compartment supported by the vehicle.

13. The system of any of claims 1 to 12, further comprising:
a control system configured to monitor a pressure in a compartment supported by the vehicle; and
an outflow valve configured to issue a discharge air flow comprising the inlet air flow compressed by the compressing element from the compartment to an external environment surrounding the vehicle body,
wherein the control system is configured to control a position of the outflow valve based on the pressure in the compartment.

14. A system comprising:
a motor-generator comprising:
a motor assembly configured to produce a primary mechanical power when the motor assembly receives an input electrical power from an electrical distribution system of a vehicle, and
a generator assembly configured to provide an output electrical power to the electrical distribution system;
a turbine assembly including a turbine, the turbine assembly configured to establish a deployed configuration relative to an aircraft body of an aircraft and establish a stowed configuration relative to the aircraft body, wherein the turbine is configured to receive a ram air flow and produce a secondary mechanical power using the ram air flow when the turbine assembly is in the deployed configuration, and wherein the turbine assembly is configured to limit a receipt of the ram air flow by the turbine when the turbine assembly is in the stowed configuration;
a compressing element configured to compress an inlet air flow to provide a compressed air flow to a compartment of the vehicle, wherein the compressing element is configured to compress the inlet air flow using at least one of the primary mechanical power or a first portion of the secondary mechanical power, and wherein the generator assembly is configured to receive a second portion of the secondary mechanical power to provide the output electrical power; and
a clutching mechanism having an engaged configuration and a disengaged configuration, wherein the clutching mechanism is configured to limit a delivery of the mechanical power from the turbine to the compressing element in the disengaged configuration and increase the delivery of the mechanical power from the turbine to the compressing element in the engaged configuration, wherein the clutching mechanism is configured to transition from the disengaged configuration to the engaged configuration when the input electrical power decreases below a threshold, and wherein the turbine assembly is configured to transition from the stowed configuration to the deployed configuration when the input electrical power decreases below the threshold.

15. A method, comprising:
producing, using a motor assembly receiving an input electrical power from an electrical distribution system of a vehicle, a primary mechanical power;
compressing, using a compressing element receiving the primary mechanical power, an inlet air flow, wherein the compressing element is configured to compress the inlet air flow using at least one of the primary mechanical power or a secondary mechanical power;
producing, when the input electrical power decreases below a threshold, and by transitioning a clutching mechanism from a disengaged configuration to an engaged configuration, the secondary mechanical power using a turbine assembly; and
causing the compressing element to compress the inlet air flow using a first portion of the secondary mechanical power and causing a generator assembly to provide an output electrical power to the electrical distribution system using a second portion of the secondary mechanical power,
wherein the clutching mechanism is configured to limit a delivery of the secondary mechanical power from the turbine assembly to the compressing element and the generator assembly in the disengaged configuration and increase the delivery of the secondary mechanical power from the turbine assembly to the compressing element and the generator assembly in the engaged configuration.
